# EUROPÄISCHE PATENTANMELDUNG

(11) **EP 2 042 839 A1**
(43) Veröffentlichungstag der Anmeldung: **01.04.2009**
(21) Anmeldenummer: 07117120.1
(22) Anmeldetag: 25.09.2007
(51) Int. Cl.: G01D 5/246, G01G 21/28

(54) **Verfahren zur Messwertübertragung in einer Mehrfach-Kraftmessvorrichtung, Mehrfach-Kraftmessvorrichtung und Kraftmessmodul**

(71) Anmelder: Mettler-Toledo AG, 8606 Greifensee (CH)
(72) Erfinder: Uster, Markus, 8606, Nänikon (CH)

(57) **Zusammenfassung**

Die Erfindung betrifft ein Verfahren und den dazu geeigneten Vorrichtungen zur Messwertübertragung einer Mehrfach-Kraftmessvorrichtung, insbesondere einer Mehrfach-Wägevorrichtung, mit mindestens zwei Kraftmessmodulen jeweils aufweisend eine Kraftmesszelle und eine Signalverarbeitungseinheit mit der die von der Kraftmesszelle erzeugten Messwerte über eine Signalleitung an eine Auswerteeinheit übertragen werden. Dabei werden jeweils die Messwerte durch die Signalverarbeitungseinheit in eine Bitsequenz gewandelt und anschliessend wird die Bitsequenz des ersten Kraftmessmoduls an die Auswerteeinheit übertragen und die Bitsequenz der Signalverarbeitungseinheit des mindestens einen weiteren Kraftmessmoduls über die Signalverarbeitungseinheit des ersten Kraftmessmoduls an die Auswerteeinheit übertragen.

## Beschreibung

Die vorliegende Erfindung betrifft ein Verfahren zur Messwertübertragung in einer Mehrfach-Kraftmessvorrichtung, insbesondere in einer Mehrfach-Wägevorrichtung, eine Mehrfach-Kraftmessvorrichtung und ein dazu geeignetes Kraftmessmodul.

Unter einer Mehrfach-Kraftmessvorrichtung ist eine modular aufgebaute Kraftmessvorrichtung zu verstehen, bei der mindestens zwei unabhängig zu messende Kräfte mit mindesten zwei unabhängigen Kraftmessmodulen individuell erfasst werden. Eine besondere Form der Mehrfach-Kraftmessvorrichtung ist eine Mehrfach-Wägevorrichtung, bei der die unabhängig zu messenden Kräfte durch die Gewichtskraft von mindestens zwei unabhängigen Wägegütern, den sogenannten Lasten, gebildet werden. Die Kraftmessmodule werden in diesem Fall als Wägemodule bezeichnet.

Die Kraftmessmodule weisen zur Bestimmung der einwirkenden Kraft jeweils eine mechanisch-elektrische Kraftmesszelle auf, die als Messgrössenumformer wirkt, indem sie die Eingangsgrösse Kraft in ein korrespondierendes, elektrisches Messsignal umformt. In entsprechender Weise erfolgt die Messgrössenumformung bei einem Wägemodul durch eine sogenannten Wägezelle, welche elektrische Messwerte erzeugt, die zu der vom Wägegut ausgeübten Gewichtskraft korrespondieren.

Die Messsignale der einzelnen Kraftmessmodule beziehungsweise der einzelnen Wägemodule werden im Allgemeinen an eine Auswerteeinheit zur Auswertung weitergeleitet. Dabei ist die Auswerteeinheit oft als zentrale Verarbeitungseinheit ausgebildet, mit der die aus den Messsignalen gewonnenen Messergebnisse beispielsweise zur Anzeige gebracht, an einem Leitrechner übermittelt oder einer Anlagensteuerung zugeführt werden können.

Mehrfach-Wägevorrichtungen finden typischerweise ihren Einsatz in automatisierten Produktions- und Testanlagen zum Verwiegen gleichgearteter Wägegüter. Insbesondere gehören dazu Anlagen für die Produktion und/oder Überprüfung von kleinen, relativ teuren Teilen, beispielsweise in Abfüll- und Verpackungsmaschinen für Tabletten, Kapseln oder Ampullen in der Pharmaindustrie, oder bei der Kontrolle von Kugellagern in der Maschinenindustrie. Beim Wiegen gleichgearteter Wägegüter handelt es sich um einen Vorgang, bei dem mehrere Lasten individuell zu wiegen sind, beispielsweise zum Zwecke des Kontrollierens, des Dosierens oder des Abfüllens auf engem Raum.

Die Anforderungen an eine solche Mehrfach-Kraftmessvorrichtung bestehen darin, dass die Kraftmessmodule eine hohe Messgenauigkeit, eine hohe Reproduzierbarkeit und somit eine hohe Stabilität aufweisen, möglichst platzsparend und kompakt angeordnet werden können und dass die einzelnen Kraftmessmodule möglichst einfach und kostengünstig aufgebaut sind.

In der US6112162 wird eine Mehrfach-Wägevorrichtungen beschrieben, bei der die analogen Signale der einzelnen Wägezellen einer zentralen Schaltvorrichtung, einem sogenannten Multiplexer, zugeführt werden. Somit kann sowohl der Verstärker als auch der Analog-Digital-Wandler von den einzelnen Kraftmessmodulen, jeweils während gewissen Zeitintervallen genutzt werden. Allerdings werden dabei die störungsempfindlichen Messsignale der Wägezellen über Verbindungsleitungen zur zentralen Auswerteeinheit und dort über die Schaltvorrichtung geführt. Dadurch können störende Einflüsse, welche sich aus der Übertragung der Signale ergeben oder welche durch die Schaltvorrichtung entstehen, die Qualität der Messsignale verschlechtern. Dementsprechend ist die erreichbare Genauigkeit beschränkt und die beschriebene Vorrichtung für den Einsatz mit hohen Genauigkeitsanforderungen weniger geeignet. Ausserdem kann mit dieser Vorrichtung nur relativ langsam gemessen werden, da erst nach Abschluss der Messung einer ersten Wägezelle mit der Messung der nächsten Wägezelle begonnen werden kann.

Des Weiteren offenbart die DE 10 2005 025 534 B3 eine Anordnung, bei der die für den Betrieb des Wägemoduls notwendige Elektronik direkt unterhalb der Wägezelle, im unteren Teil des Wägemoduls angeordnet ist. Dadurch können die aus der Übertragung des Messsignals resultierenden Störungen vermieden werden. Nachteilig bei dieser Anordnung sind jedoch sowohl die hohen Kosten, welche aus dem grossen Platzbedarf und dem hohen Vervielfältigungsgrad der Elektronik resultieren als auch die Störungen der Wägezellen, welche sich aus der Wärmeentwicklung der Elektronikbauteile ergeben. Die Problematik der Wärmeentwicklung besteht darin, dass die von der Elektronik erzeugte Wärme gemäss dem bekannten Phänomen des Auftriebs zu den wärmeempfindlichen Wägezellen aufsteigt und somit die Genauigkeit und/oder die Stabilität der Messvorrichtung beeinträchtigen kann.

Der vorliegenden Erfindung liegt daher die Aufgabe zugrunde, ein Verfahren zur Messwertübertragung einer Mehrfach-Kraftmessvorrichtung, insbesondere einer Mehrfach-Wägevorrichtung, eine Mehrfach-Kraftmessvorrichtung und eine geeignetes Kraftmessmodul anzugeben, mit welchen ein einfacher, kostengünstiger, hohen Anforderungen bezüglich Messgeschwindigkeit, Messgenauigkeit und Stabilität erfüllender Aufbau und Betrieb der Messvorrichtung erreicht werden kann.

Diese Aufgabe wird mit einem Verfahren, einer Mehrfach-Kraftmessvorrichtung und einem Kraftmessmodul gelöst, welche die in den unabhängigen Ansprüchen angegebenen Merkmale aufweisen. Vorteilhafte Ausgestaltungen der Erfindung sind in den weiteren, abhängigen Ansprüchen angegeben.

Die Erfindung betrifft ein Verfahren und eine Vorrichtung zur Messwertübertragung einer Mehrfach-Kraftmessvorrichtung, insbesondere einer Mehrfach-Wägevorrichtung, mit mindestens zwei Kraftmessmodulen jeweils aufweisend eine Kraftmesszelle und eine Signalverarbeitungseinheit mit der die von der Kraftmesszelle erzeugten Messwerte über eine Signalleitung an eine Auswerteeinheit übertragen werden. Dabei werden jeweils die Messwerte durch die Signalverarbeitungseinheit in eine Bitsequenz gewandelt und die Bitsequenz der Signalverarbeitungseinheit des ersten Kraftmessmoduls wird an die Auswerteeinheit übertragen und die Bitsequenz der Signalverarbeitungseinheit des mindestens einen weiteren Kraftmessmoduls wird über eine Zwischenleitung an die Signalverarbeitungseinheit des ersten Kraftmessmoduls und von dort an die Auswerteeinheit übertragen. Dadurch wird erreicht, dass die Messwerte der Kraftmesszelle in eine gegenüber Störeinflüssen robuste Form umgewandelt werden, dass durch die Wandlung der Messwerte in den einzelnen Kraftmessmodulen eine sehr hohe Messgeschwindigkeiten erreicht wird, dass sich durch die kürzeren Leitungslängen Kostenvorteile ergeben, und dass durch die einfache Weitergabe der Messwerte zwischen den Signalverarbeitungseinheiten der verschiedenen Kraftmessmodule der Einsatz einer aufwändigen, wärmeerzeugenden Elektronik zur Kommunikationssteuerung vermieden werden kann.

Eine Bitsequenz dient zur Speicherung und/oder Übertragung von Informationen, also beispielsweise von Messwerten, als Folge von Einheiten definierter elektrischer Signalzustände, welche typischerweise durch eine Folge von Null- und Eins-Werten präsentiert wird. Durch die Umformung der Messwerte in eine Bitsequenz wird folglich das sensitive und hochpräzise Messsignal der Kraftmesszelle in eine gegenüber Störeinflüssen robuste und damit zur Übertragung und weiteren Verarbeitung gut geeignete Form umgewandelt.

Typischerweise, insbesondere bei hohen Präzisionsanforderungen, bedingt die Umwandlung der Messwerte in eine Bitsequenz einen sehr zeitaufwändigen Prozess. Dadurch, dass in jedem Kraftmessmodul dieser Umwandlungsprozess gleichzeitig durchgeführt wird, kann ein hoher Grad an Parallelität und damit eine sehr hohe Messgeschwindigkeiten erreicht werden.

Des Weiteren kann die Messgeschwindigkeit der Mehrfach-Kraftmessvorrichtung durch ein schnelles Auslesen der Gesamtheit der Bitsequenzen erhöht werden. Dieses schnelle, serielle Auslesen wird dadurch ermöglicht, dass die Bitsequenz in jedem Kraftmessmodul individuell erzeugt und bereitgestellt wird, wobei die Bitsequenzen sämtlicher Kraftmessmodule dann miteinander an die Auswerteeinheit übertragen werden. In der Auswerteeinheit können dann die empfangenen Bitsequenzen durch schnelle serielle oder parallel geführte Prozesse mit hoher Geschwindigkeit weiterverarbeitet werden.

Durch die direkte Verbindung zwischen den Signalverarbeitungseinheiten der verschiedenen Kraftmessmodule wirken diese wie eine einzige Signalverarbeitungseinheit. Dementsprechend kann der Einsatz einer aufwändigen Elektronik zur Kommunikationssteuerung in den Kraftmessmodulen vermieden werden. Somit wird die Wärmeerzeugung in den einzelnen Kraftmessmodulen reduziert und in Folge die Stabilität der Mehrfach-Kraftmessvorrichtung erhöht.

Ferner ergeben sich durch die direkte Verbindung der Signalverarbeitungseinheiten kürzeren Leitungslängen und damit Kostenvorteile. Ausserdem ergeben sich durch die Bündelung der aufwändigen Elektronik, insbesondere der Steuervorrichtungen und Recheneinheiten zur Messwertauswertung, in der Auswerteeinheit Vorteile einerseits bezüglich der Kosten und andererseits, durch die geringere Wärmeentwicklung in den Kraftmessmodulen, bezüglich der Stabilität.

Mit dem Begriff Leitung werden alle Arten von elektrischen Leitungen, wie einadrige oder mehradrige Kabel, Litzen oder Drähte, sowie die Führung des elektrischen Stroms über feste Vorrichtungen wie Erdungsschienen, Gehäuse und Verbindungsstangen, bezeichnet, die zur Übertragung elektrischer Signale von den Kraftmessmodulen zur Auswerteeinheit geeignet sind.

Während die aufwändigen elektronischen Bauteile wie Recheneinheit, Steuer- und Kontrollvorrichtung in der Auswerteeinheit angeordnet sind und gemeinsam von allen Kraftmessmodulen genutzt werden können, befindet sich in den jeweiligen Kraftmessmodulen lediglich eine minimale Elektronik zur Erzeugung der Bitsequenzen. Da die Anzahl der Kraftmessmodule stets grösser als die Anzahl der Auswerteeinheiten ist, wird somit ein einfacher und kostengünstiger Aufbau der gesamten Mehrfach-Kraftmessvorrichtung erreicht.

In einer bevorzugten Ausgestaltung der Erfindung werden jeweils der Signalverarbeitungseinheit über einen ersten Eingang die Messwerte der Kraftmesszelle und/oder über einen zweiten Eingang die Bitsequenz der Signalverarbeitungseinheit des mindestens einen weiteren Kraftmessmoduls zugeführt. Damit ist die Signalverarbeitungseinheit in der Lage gleichzeitig und/oder sequenziell geschaltet auf verschiedenen Kanälen Bitsequenzen und die Messwerte der Kraftmesszelle zu verarbeiten.

In einer weiteren Ausgestaltung der Erfindung sind die Signalverarbeitungseinheiten aller weiteren Kraftmessmodule kettenförmig miteinander verbunden und die Bitsequenzen der weiteren Kraftmessmodule werden jeweils zur Signalverarbeitungseinheit des jeweils benachbarten, näher zur Auswerteeinheit angeordneten Kraftmessmoduls übertragen. Dadurch kann eine sehr effiziente Signalübertragung für alle Kraftmessmodule erreicht werden.

In einer weiteren, bevorzugten Ausgestaltung der Erfindung werden die Bitsequenzen mittels eines, vorzugsweise durch die Auswerteeinheit erzeugten und über mindestens eine Synchronisationsleitung den Kraftmessmodulen zugeführten, Taktsignals synchronisiert und/oder bitweise und im Wesentlichen simultan weitergeleitet. Vorzugsweise werden die Signalverarbeitungseinheit des ersten und/oder des mindestens einen weiteren Kraftmessmoduls über eine Synchronisationsleitung mit der Auswerteeinheit verbunden. Durch die synchronisierte und/oder bitweise und im Wesentlichen simultane Wandlung in den einzelnen Kraftmessmodulen wird ein sehr hoher Grad an Parallelität und damit eine sehr hohe Messgeschwindigkeiten erreicht.

In einer weiteren Ausgestaltung der Erfindung werden jeweils die von der Kraftmesszelle erzeugten Messwerte durch einen in der Kraftmesszelle angeordneten Analog-Digital-Wandler in eine Bitsequenz gewandelt. Dadurch werden die störungsempfindlichen Messwerte der Kraftmesszelle in eine robuste, digitale Form umgewandelt und damit vor möglichen Qualitätsverlusten geschützt. Des Weiteren können auch die Messwerte der Kraftmesszelle, vorgängig zur Analog-Digital-Wandlung, durch eine entsprechende Signalaufbereitung in der Kraftmesszelle verstärkt und/oder impedanzgewandelt werden.

In einer weiteren, bevorzugten Ausgestaltung weist die Signalverarbeitungseinheit ein Schieberegister mit zwei Eingängen auf, wobei an dessen ersten Eingang die durch den Analog-Digital-Wandler digitalisierten Messwerte der Kraftmesszelle und an dessen zweiten Eingang die Bitsequenz der Signalverarbeitungseinheit des mindestens einen weiteren Kraftmessmoduls eingelesen werden. Durch die Schieberegister kann ein einfacher, kostengünstiger Aufbau mit gängigen Standardprodukten realisiert werden.

In einer weiteren Ausgestaltung der Erfindung wird jeweils die Bitsequenz der Signalverarbeitungseinheiten, oder gegebenenfalls des Schieberegisters, mit der Bitsequenz der Signalverarbeitungseinheiten eines benachbarten Kraftmessmoduls kombiniert und diese kombinierte Bitsequenz wird als serieller Bitstrom an die Auswerteeinheit oder an den zweiten Eingang der Signalverarbeitungseinheit des mindestens einen weiteren Kraftmessmoduls übertragen. Dadurch werden die einzelnen Schieberegister praktisch zu einem einzigen großen Schieberegister kombiniert, welches idealerweise die Schieberegister aller Kraftmessmodule der Mehrfach-Kraftmessvorrichtung zusammenfasst.

In einer weiteren Ausgestaltung der Erfindung werden jeweils die Analog-Digital-Wandler durch ein Steuersignal der Auswerteeinheit gesteuert, insbesondere simultan gestartet und/oder die Analog-Digital-Wandler erzeugen jeweils ein Status-Signal, insbesondere ein Anzeigesignal nach Beendigung des Wandlungsprozesses, welches, gegebenenfalls via eine Logikschaltung, an die Auswerteeinheit übermittelt wird. Vorzugsweise werden dabei die Analog-Digital-Wandler des ersten und/oder des mindestens einen weiteren Kraftmessmoduls über eine Statusleitung und/oder mit einer Steuerleitung mit der Auswerteeinheit verbunden.

In einer weiteren Ausgestaltung der Erfindung registriert die Auswerteeinheit das Ende der am längsten dauernden Analog-Digital-Wandlung und sendet daraufhin ein Taktsignal zur Übertragung der Bitsequenz und/oder der ein Steuersignal zum erneuten, vorzugsweise simultanen, Starten aller Analog-Digital-Wandler. Dadurch werden unnötige Wartezeiten vermieden und die Messgeschwindigkeit erhöht. Die Wartezeiten ergeben sich dadurch, dass sicherheitshalber genügend lange das Beenden der längsten Umwandlungsprozesse abgewartet werden muss.

In einer weiteren Ausgestaltung der Erfindung wird während des Betriebs der Mehrfach-Kraftmessvorrichtung ein Zeitintervall für Messungen vorgesehen, während dem die Übertragung der Bitsequenzen unterbrochen wird und/oder es wird ein Zeitintervall für die Messwertübertragung vorgesehen, während dem die Messwerterfassung unterbrochen wird. Dadurch werden Interferenzen zwischen den verschiedenen Prozessen vermieden.

In einer weiteren Ausgestaltung der Erfindung wird ein Zeitintervall zur Übertragung der Messwerte so lange bemessen, bis ein vorbestimmtes Muster der Bitsequenz in der Auswerteeinheit erscheint, insbesondere bis eine Sequenz von Null-Werten erscheint und am zweiten Eingang der Signalverarbeitungseinheit des letzten weiteren Kraftmessmoduls stets Null-Werte eingespeist werden. Auf diese Weise kann auch eine nicht konfigurierte Änderung der Anzahl der Kraftmessmodule zuverlässig erkannt werden. Der Übertragungsprozess ist daher sehr flexibel bezüglich Hinzufügen oder Entfernen von Kraftmessmodulen.

In einer weiteren Ausgestaltung der Erfindung werden durch die Signalverarbeitungseinheit mindestens eines Kraftmessmoduls zusätzlich zu den Messwerten der Kraftmesszelle die Messwerte weiterer Sensoren, insbesondere die Messwerte eines Temperatursensors und/oder ein Identifizierungscode an die Auswerteeinheit übermittelt. Durch diese Integration können die verschiedensten Messwerte problemlos und mit hoher Effizienz an die Auswerteeinheit übertragen werden.

In einer weiteren, bevorzugten Ausgestaltung der Erfindung ist die Auswerteeinheit weitgehend räumlich getrennt und/oder weitgehend thermisch isoliert von den Kraftmesszellen der jeweiligen Kraftmessmodule angeordnet um eine Übertragung von Störungen von der Auswerteeinheit auf die Kraftmesszelle zu vermeiden.

In einer weiteren, erfindungsgemässen Ausgestaltung weist die Signalleitung oder die Zwischenleitung eine Kupplung auf, mit der die Signalverarbeitungseinheit des mindestens einen weiteren Kraftmessmoduls in die Mehrfach-Kraftmessvorrichtung einfügbar ist. Vorzugsweise ist dabei die Kupplung derart ausgebildet, dass beim Zusammenfügen der Kupplungsteile eine durchgehende elektrische Verbindung auftrennbar ist und dass jeweils eine Verbindung zum zweiten Eingang und zum Ausgang der Signalverarbeitungseinheit des einzufügenden Kraftmessmoduls herstellbar ist. So können die Kraftmessmodule, ohne grossen zeitlichen Unterbruch, idealerweise während des Betriebs der Kraftmessvorrichtung ausgewechselt werden. Besonders beim Einsatz in industriellen Anlagen ergibt sich dadurch der grosse Vorteil, dass Betriebsunterbrüche der gesamten Anlage vermieden oder zumindest auf ein unvermeidbares Minimum reduziert werden können.

Die einzelnen Kraftmessmodule können in beliebiger Weise angeordnet sein, beispielsweise reihenförmig, flächenförmig, dreidimensional verteilt, zufällig verteilt, ringförmig oder arrayförmig. Unter arrayförmig ist dabei eine regelmässige Anordnung zu verstehen, beispielsweise eine reihenförmige, ein-dimensionale Anordnung wie eine Zeile oder eine flächenförmige, zwei-dimensionale Anordnung wie eine Matrix. Denkbar für eine arrayförmig Anordnung ist auch eine drei-dimensionale Anordnung mit mehreren Lagen von übereinander liegenden zwei-dimensionalen Anordnungen.

Einzelheiten der erfindungsgemässen Kraftmessvorrichtung, des erfindungsgemässen Kraftmessmoduls und des erfindungsgemässen Verfahrens ergeben sich anhand der Beschreibung der in den Zeichnungen dargestellten Ausführungsbeispiele. Es zeigen:
- Fig. 1: in perspektivischer Darstellung eine Mehrfach-Kraftmessvorrichtung mit sechs Kraftmessmodulen, welche in arrayförmig angeordnet sind und welche jeweils untereinander und mit einer Auswerteeinheit verbunden sind;
- Fig. 2: eine Prinzipzeichnung einer Mehrfach-Kraftmessvorrichtung entsprechend Figur 1 mit zwei Kraftmessmodulen im Schnitt, deren Messwerterfassung auf dem Prinzip der elektromagnetischen Kraftkompensation basiert und die eine Signalverarbeitungseinheit zur Erzeugung von Bitsequenzen aufweisen, wobei die Bitsequenz des zweiten Kraftmessmodul über die Signalverarbeitungseinheit des ersten Kraftmessmoduls an die Auswerteeinheit übertragen wird;
- Fig. 3: ein vereinfachtes Schaltschema einer Mehrfach-Kraftmessvorrichtung entsprechend Figur 2, jedoch mit einer Vielzahl n von Kraftmessmodulen mit den zugehörigen Signalverarbeitungseinheiten, welche jeweils zwei Eingänge und einen Ausgang aufweisen;
- Fig. 4: eine starke vereinfachte Prinzipzeichnung einer MehrfachKraftmessvorrichtung entsprechend Figur 3, mit Signalverarbeitungseinheiten, welche einen Analog-Digital-Wandler, ein Schieberegister (SR) und ein Logikelement (G) aufweisen.

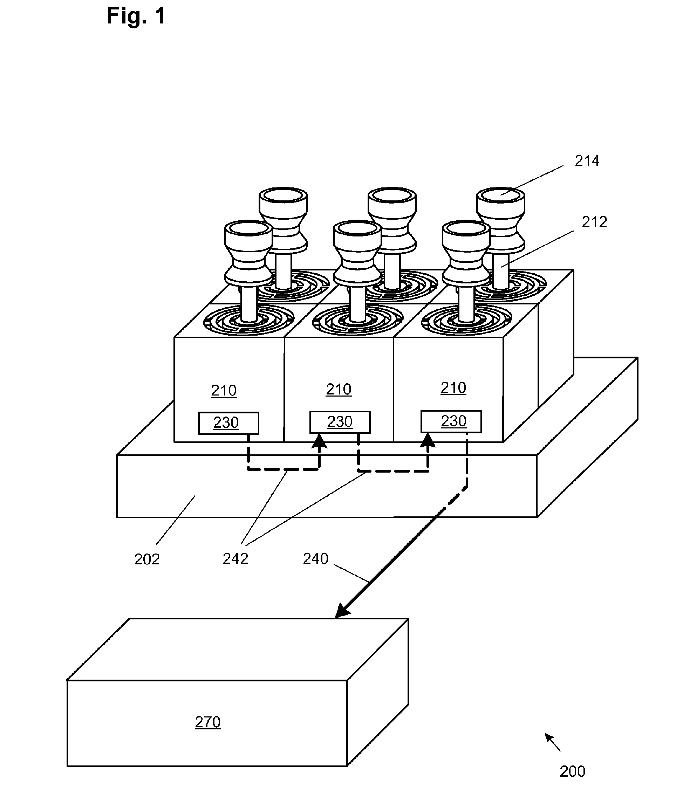

Die Figur 1 zeigt in perspektivischer Darstellung eine Mehrfach-Kraftmessvorrichtung 200 mit sechs Kraftmessmodulen 210, die arrayförmig angeordnet sind. Die Kraftmessmodule 210 weisen je eine, hier nicht dargestellte, im Innern des Kraftmessmoduls 210 eingebaute Kraftmesszelle auf, die mit einem nach aussen führenden Kraftübertragungsgestänge 212 verbunden ist. Ausgehend von Kraftmesszelle erstreckt sich jeweils entgegen der Lastrichtung das Kraftübertragungsgestänge 212, an dessen Ende jeweils ein Kraftaufnehmer 214 angebracht ist. Oberhalb der Kraftaufnehmer 214 befinden sich üblicherweise die nicht dargestellten, zu wiegenden Objekte beziehungsweise Lasten.

Jedes Kraftmessmodul 210 ist an einer Aufnahmestruktur in Form einer Grundplatte 202 befestigt. Die Kraftmessmodule sind 210 lösbar mit der Grundplatte 202 verbunden und können bei Bedarf jeweils gegen ein gleich geartetes Kraftmessmodul 210 ausgewechselt werden, beispielsweise im Servicefall oder, wenn die Mehrfach-Kraftmessvorrichtung 200 an einen anderen Lastbereich angepasst werden soll.

Die Kraftmesszelle des ersten Kraftmessmoduls 210 erzeugt aus einer auf sie einwirkenden Kraft einen dazu korrespondierenden Messwert, welcher durch eine nicht dargestellte Signalverarbeitungseinheit 230 des ersten Kraftmessmoduls 210 in eine Bitsequenz B₁ umgewandelt wird. Diese Bitsequenz B₁ wird dann über die Signalleitung 240 an die Auswerteeinheit 270 übermittelt.

In gleicher Weise wandelt die Signalverarbeitungseinheit 230 des zweiten Kraftmessmoduls 210 die Messwerte der Kraftmesszelle in eine entsprechende zweite Bitsequenz B₂. Die Bitsequenz B₂ des zweiten Kraftmessmoduls 210 wird dann über eine Zwischenleitung 242 an die Signalverarbeitungseinheit 230 des ersten Kraftmessmoduls 210 und von dort an die Auswerteeinheit 270 übermittelt.

In diesem Ausführungsbeispiel sind die sechs Kraftmessmodule 210 jeweils kettenförmig miteinander verbunden. Dabei werden die Bitsequenzen B₂,..., B₆ der Signalverarbeitungseinheit 230 des zweiten bis sechsten Kraftmessmoduls 210 jeweils über Zwischenleitungen 242 an die Signalverarbeitungseinheit 230 des benachbarten Kraftmessmoduls 210 weitergegeben. Somit gelangt die Bitsequenz B₂,..., B₆ des zweiten bis sechsten Kraftmessmoduls 210 nach einer bestimmten Anzahl von Zwischenstufen zur Signalverarbeitungseinheit 230 des ersten Kraftmessmoduls 210 und von dort über die Signalleitung 240 zur Auswerteeinheit 270.

Das beschriebene Prinzip des Weitergebens der Bitsequenzen B₁,..., Bₙ lässt sich in analoger Weise auf eine Mehrfach-Kraftmessvorrichtung 200 mit beliebig vielen Kraftmessmodulen 210, insbesondere auf eine Zahl von n Kraftmessmodulen 210, fortsetzen, wobei n eine natürliche Zahl größer oder gleich 2 ist.

Die Auswerteeinheit 270 ist in einiger Distanz von den Kraftmessmodulen 210 angeordnet um eine gegenseitige Störung von Elektronik der Auswerteeinheit 270 und der Kraftmessmodule 210 zu vermeiden. Diese Störungen können auf vielfältige Weise auftreten beispielsweise als elektromagnetische Felder, Wärmestrahlung, Wärmekonvektion oder Erschütterungen.

In der Auswerteeinheit 270 werden die über die Signalleitung 240 übermittelten Signale ausgewertet und und/oder geeignet umgeformt. Die Ergebnisse der Auswertung können auf vielfältige Weise zur weiteren Verarbeitung weitergegeben werden, beispielsweise an eine Anzeigevorrichtung, an eine Anlagensteuerung oder an einen Leitrechner.

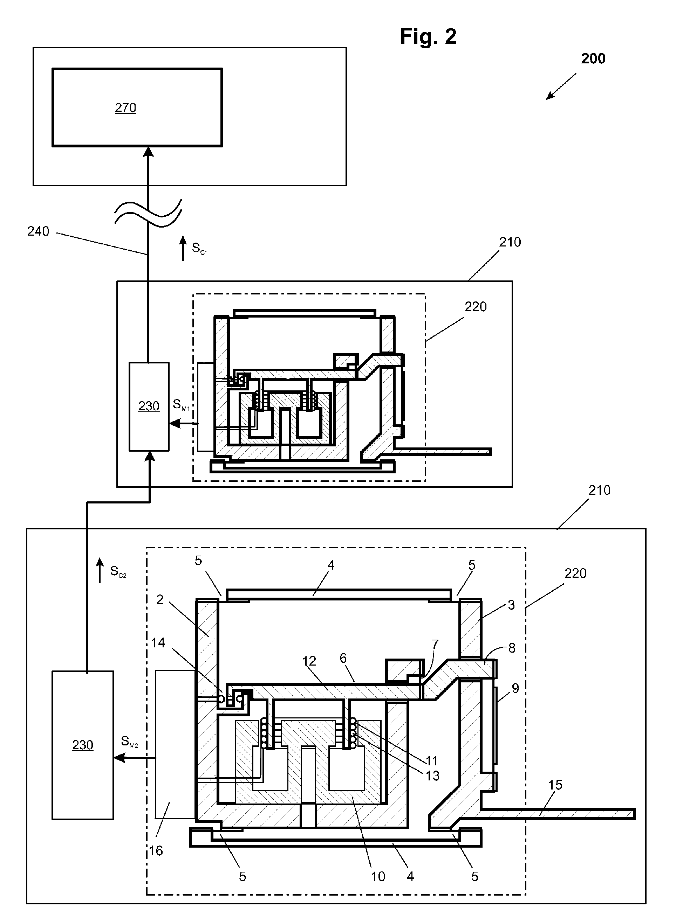

Figur 2 zeigt stark schematisiert eine Prinzipzeichnung einer Mehrfach-Kraftmessvorrichtung 200 mit zwei identischen Kraftmessmodulen 210 entsprechend Figur 1. Dabei basieren die Kraftmessmodule 210 auf dem Prinzip der elektromagnetischen Kraftkompensation und eignen sich daher besonders für die Verwendung in der Wägetechnologie, insbesondere zur hoch-präzisen Gewichtsbestimmung.

Das Kraftmessmodul 210 weist eine Kraftmesszelle 220 auf, welche wiederum eine Vorrichtung zur Kraftübertragung mit einer Parallelführung mit einem feststehenden Bereich 2 und einem vertikal auslenkbaren Bereich 3, welche jeweils an den Enden eines Paars von Lenkern 4 über Biegelager 5 angelenkt sind, aufweist. Der vertikal auslenkbare Bereich 3 weist einen zur Aufnahme einer zu messenden Last dienenden Ausleger 15 auf. Die Normalkomponente der von einer Last bewirkten Kraft wird vom vertikal auslenkbaren Bereich 3 durch ein Koppelelement 9 auf den kurzen Hebelarm 8 des Hebels 6 übertragen. Der Hebel 6 ist mittels eines Biegelagers 7 an einem Teil des feststehenden Bereichs 2 abgestützt. Die Kraftmesszelle weist ferner ein topfförmiges Permanentmagnetsystem 10, das in fester Verbindung mit dem feststehenden Teil 2 angeordnet ist, und über einen Luftspalt 11 verfügt, auf. Im Luftspalt 11 ist eine mit dem längeren Hebelarm 12 des Hebels 6 verbundene Spule 13 angeordnet. Die Spule 13 wird von einem Kompensationsstrom durchflossen, dessen Mass von der auf den Hebel 6 einwirkende Kraft abhängt. Die Lage des Hebels 6 wird von einem opto-elektrischen Positionsgeber 14 gemessen, der mit einer Regeleinrichtung 16 verbunden ist, welche den Kompensationsstrom in Abhängigkeit der zugeführten Signale des opto-elektrischen Positionsgebers 14 derart regelt, dass der Hebel 6 stets in gleicher Lage gehalten oder nach einer Laständerung in diese wieder zurückgeführt wird. Durch dieses Prinzip der Kraftkompensation kann eine sehr hohe Messgenauigkeit erreicht werden, was insbesondere beim Abmessen kleinster Mengen von Wägegut besonders vorteilhaft ist.

Des Weiteren kann das Kraftmessmodul auch als direkt wirkende Kraftmessvorrichtung ausgebildet sein. Dabei wird auf eine Kraftübertragung via Hebel 6 verzichtet indem die Spule 13 direkt mit dem nach aussen führenden Kraftübertragungsgestänge 212 verbunden ist. Dabei wird der Kompensationsstrom derart geregelt, dass die Kompensationskraft der auf das Kraftübertragungsgestänge einwirkenden Last entgegenwirkt und somit das Kraftübertragungsgestänge in einer konstanten Position gehalten wird.

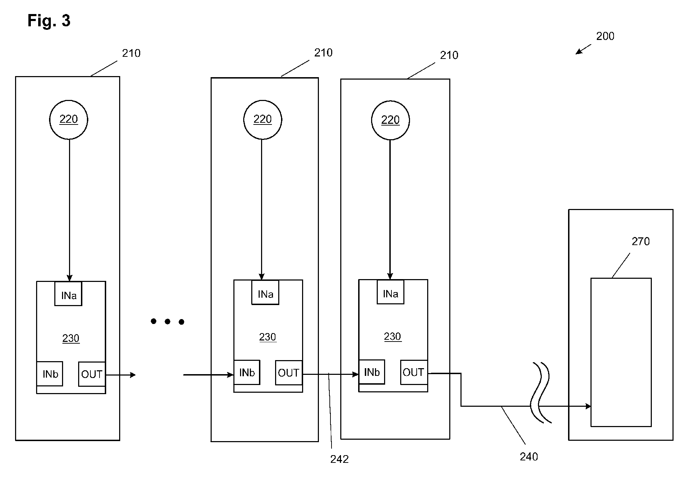

Figur 3 zeigt ein vereinfachtes Schaltschema einer Mehrfach-Kraftmessvorrichtung 200 mit n Kraftmessmodulen 210 welche jeweils eine Signalverarbeitungseinheit 230 zur Erzeugung von Bitsequenzen B₁ ... Bₙ aufweisen. Der Index n steht für eine beliebige natürliche Zahl welche größer oder gleich 2 ist. Vorzugsweise sind alle Kraftmessmodule 210 identisch aufgebaut und beliebig auswechselbar.

Die Signalverarbeitungseinheiten 230 weisen jeweils einen ersten Eingang INa, einen zweiten Eingang INb und einen Ausgang OUT auf. Der erste Eingang INa ist jeweils mit der Kraftmesszelle 220 verbunden sodass die Messwerte der Kraftmesszelle 220 an die Signalverarbeitungseinheit 230 übertragen werden können. Der Ausgang OUT der ersten Signalverarbeitungseinheit 230 ist über eine Signalleitung mit der Auswerteeinheit 270 verbunden. Dadurch kann die von der Signalverarbeitungseinheit 230 des ersten Kraftmessmoduls 210 erzeugte Bitsequenz B₁ übertragen werden.

Der zweite Eingang INb der ersten Signalverarbeitungseinheit 230 ist über eine Zwischenleitung 242 mit dem Ausgang einer Signalverarbeitungseinheit 230 eines zweiten Kraftmessmoduls 210 verbunden. Auf diese Weise kann die Bitsequenz B₂ der Signalverarbeitungseinheit 230 des zweiten Kraftmessmoduls 210 auf die Signalverarbeitungseinheit des ersten Kraftmessmoduls 210 übertragen werden. In der Signalverarbeitungseinheit 230 des ersten Kraftmessmoduls 210 wird dann die Bitsequenz B₂ der Signalverarbeitungseinheit 230 des zweiten Kraftmessmoduls 210 mit der Bitsequenz B₁ der Signalverarbeitungseinheit 230 des ersten Kraftmessmoduls 210 zu einer gemeinsamen Bitsequenz B₁ kombiniert.

In analoger Weise sind die weiteren Kraftmessmodule 210 kettenförmig untereinander verbunden, so dass die Bitsequenz Bₙ der Signalverarbeitungseinheit 230 des letzten Kraftmessmoduls 210 via die Signalverarbeitungseinheiten 230 beliebig vieler zwischengeschalteter Kraftmessmodule 230 an die Auswerteeinheit 270 übertragen werden.

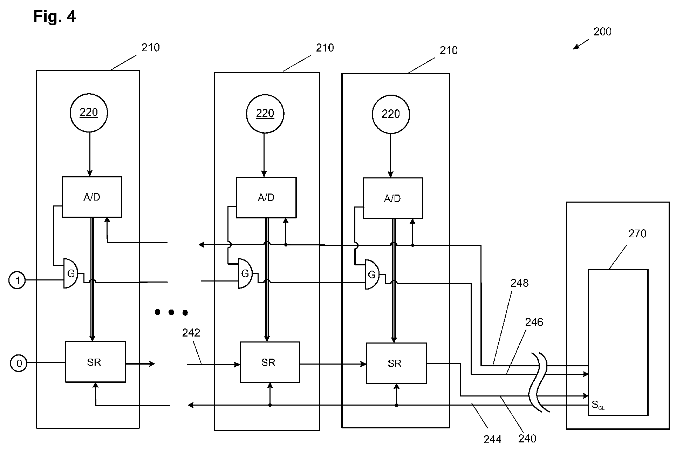

Figur 4 zeigt ein vereinfachtes Schaltschema einer Mehrfach-Kraftmessvorrichtung 200 entsprechend Figur 3 mit n Kraftmessmodulen 210 welche jeweils einen Analog-Dital-Wandler A/D und ein Schieberegister SR zur Erzeugung von Bitsequenzen B₁ ... Bₙ aufweisen. Auch in diesem Fall sind vorzugsweise alle Kraftmessmodule 210 identisch aufgebaut und beliebig auswechselbar.

Die Mehrfach-Kraftmessvorrichtung 200 weist zusätzlich eine Synchronisationsleitung 244 auf, durch welche die Signalverarbeitungseinheit 230 der Kraftmessmodule 210 mit der Auswerteeinheit 270 verbunden sind. Über diese Synchronisationsleitung 244 wird ein in der Auswerteeinheit 270 erzeugtes Taktsignal S_{CL} an die Signalverarbeitungseinheit 230 der einzelnen Kraftmessmodule 210 weitergeleitet.

Jeder Taktimpuls des Taktsignals S_{CL} bewirkt, dass sich die Bitsequenz der Schieberegister jeweils um 1 Bit verschiebt. Dabei wird das Bit am Ausgang eines Schieberegisters SR über die Zwischenleitung 242 an den zweiten Eingang des Schieberegisters SR des benachbarten Kraftmessmoduls 210 übertragen. Davon ausgenommen ist das Schieberegister SR des ersten Kraftmessmoduls 210, bei dem das Bit am Ausgang zur Auswerteeinheit 270 übertragen wird. Ausserdem wird am zweiten Eingang des Schieberegisters SR des letzten Kraftmessmoduls 210 ein NullWert (0) eingelesen.

Dieser Vorgang wird sooft wiederholt, bis die Bitsequenzen aller Kraftmessmodule 210 an die Auswerteeinheit 270 bitweise übertragen sind. Das kann einerseits dadurch erreicht werden, dass eine genau vordefinierte Anzahl von Taktimpulsen an die Synchronisationsleitung 244 abgegeben wird oder dass andererseits so viele Taktimpulse an die Synchronisationsleitung 244 abgegeben werden bis am Eingang der Auswerteeinheit 270 ein vordefiniertes Bitmuster, in diesem Fall eine Serie von Null-Werten (0), erscheint.

Des Weiteren weist die Mehrfach-Kraftmessvorrichtung 200 eine Steuerleitung 248 auf, durch welche die Analog-Digital-Wandler A/D der jeweiligen Kraftmessmodule 210 mit der Auswerteeinheit 270 verbunden sind. Über diese Steuerleitung 248 können die Analog-Digital-Wandler A/D simultan durch ein entsprechendes Steuersignal von der Auswerteeinheit 270 gestartet werden.

Außerdem weist die Mehrfach-Kraftmessvorrichtung 200 eine Statusleitung 246 auf, welche einerseits mit der Auswerteeinheit 270 und andererseits in jedem Kraftmessmodul 210 über ein Logikelement G mit dem Analog-Digital-Wandler A/D verbunden ist. Sobald der Analog-Digital-Wandler A/D seinen Umwandlungsprozess beendet hat, signalisiert er dieses Ereignis, in diesem Fall durch einen Eins-Wert (1) an das zugehörige Logikelement G. Das Logikelement G ist in diesem Fall als AND-Gatter ausgebildet, welches das Signal des Analog-Digital-Wandlers A/D mit dem Signal der Statusleitung 246 des benachbarten Kraftmessmoduls 210 über eine AND Operation verknüpft. In Fällen, bei denen sowohl der Analog-Digital-Wandler des eigenen wie auch des vorgängigen Kraftmessmoduls 210 das Ende des Wandlungsprozesses signalisieren, wird ein entsprechendes Eins Signal an das nachfolgende Kraftmessmodul 210 oder an die Auswerteeinheit 270 weitergeleitet. Beim Logikelement des letzten Kraftmessmoduls 210 wird ein konstanter Eins-Wert (1) eingespeist. Die Statusleitung 246 mit den entsprechenden Logikelementen G bewirkt, dass der Auswerteeinheit 270 das Ende des am längsten dauernden Wandlungsprozesses signalisiert wird.

Das Messverfahren kann im synchronen oder asynchronen Modus betrieben werden. Beim synchronen Modus werden alle Analog-Digital-Wandler A/D simultan gestartet und die Messwerte nach einem vordefinierten Zeitintervall ausgelesen. Vorzugsweise wird das Zeitintervall genügend groß bemessen, sodass alle Analog-Digital-Wandler A/D ihren Umwandlungsprozess abgeschlossen und die entsprechende Bitsequenz dem Schieberegistern SR übergeben haben. In diesem Fall werden die Statusleitung 246 sowie die Gatter G nicht benötigt.

Beim asynchronen Modus wird der Auswertevorrichtung 270 das Ende des letzten Wandlungsprozesses über die Statusleitung 246 signalisiert. Daraufhin kann die Auswerteeinheit 270 unverzüglich mit dem Auslesen der Bitsequenzen und dem anschließenden Neustart der Analog-Digital-Wandler A/D fortfahren. Durch diesen asynchronen Modus werden unproduktive Todzeiten vermieden und somit die Messgeschwindigkeit des Messverfahrens und der Mehrfach-Kraftmessvorrichtungen 200 deutlich erhöht Werden.

Wie in den zuvor beschriebenen Ausführungsbeispielen lässt sich auch in diesem Fall das Prinzip in analoger Weise auf Mehrfach-Kraftmesssvorrichtung 200 mit einer beliebigen Anzahl von Kraftmessmodulen 210 fortsetzen.

### Bezugszeichenliste

- 2: feststehender Bereich
- 3: vertikal auslenkbarer Bereich
- 4: Lenker
- 5, 7: Biegelager
- 6: Hebel
- 8, 12: Hebelarm
- 9: Koppelelement
- 10: Permanentmagnetsystem
- 11: Luftspalt
- 13: Spule
- 14: opto-elektrischer Positionsgeber
- 15: Ausleger
- 16: Regeleinrichtung
- 200: Mehrfach-Kraftmessvorrichtung
- 202: Grundplatte
- 210: Kraftmessmodul
- 212: Kraftübertragungsgestänge
- 214: Kraftaufnehmer
- 216: Durchführung
- 220: Kraftmesszelle
- 230: Signalverarbeitungseinheit
- 240: Signalleitung
- 242: Zwischenleitung
- 244: Synchronisationsleitung
- 246: Statusleitung
- 248: Steuerleitung
- 270: Auswerteeinheit
- B₁, B₂, ... Bₙ: Bitsequenz
- S_{CL}: Taktsignal
- A/D: Analog-Digital-Wandler
- SR: Schieberegister
- G: Logikelement

## Patentansprüche

1. Verfahren zur Messwertübertragung in einer Mehrfach-Kraftmessvorrichtung (200), insbesondere einer Mehrfach-Wägevorrichtung, mit mindestens zwei Kraftmessmodulen (210), jeweils aufweisend eine Kraftmesszelle (220) und eine Signalverarbeitungseinheit (230) mit der die von der Kraftmesszelle (220) erzeugten Messwerte über eine Signalleitung (240) an eine Auswerteeinheit (270) übertragen werden, **dadurch gekennzeichnet, dass** jeweils die Messwerte durch die Signalverarbeitungseinheit (230) in eine Bitsequenz (B₁, B₂, ... Bₙ) gewandelt werden und dass die Bitsequenz (B₁) der Signalverarbeitungseinheit (230) des ersten Kraftmessmoduls (210) an die Auswerteeinheit (270) und die Bitsequenz (B₂, B₃, ... Bₙ) der Signalverarbeitungseinheit (230) des mindestens einen weiteren Kraftmessmoduls (210) über eine Zwischenleitung (242) an die Signalverarbeitungseinheit (230) des ersten Kraftmessmoduls (210) und von dort an die Auswerteeinheit (270) übertragen wird.

2. Verfahren zur Messwertübertragung nach Anspruch 1, **dadurch gekennzeichnet, dass** jeweils der Signalverarbeitungseinheit (230) über einen ersten Eingang (INa) die Messwerte der Kraftmesszelle (220) und/oder über einen zweiten Eingang (INb) die Bitsequenz (B₁, B₂, ... Bₙ) der Signalverarbeitungseinheit (230) des mindestens einen weiteren Kraftmessmoduls (210) zugeführt werden.

3. Verfahren zur Messwertübertragung nach Anspruch 1 oder 2, **dadurch gekennzeichnet, dass** die Signalverarbeitungseinheiten (230) aller Kraftmessmodule (210) kettenförmig miteinander verbunden sind und dass die Bitsequenzen (B₂, B₃, ... Bₙ) der weiteren Kraftmessmodule (210) jeweils zur Signalverarbeitungseinheit (230) des jeweils benachbarten, näher zur Auswerteeinheit (270) angeordneten Kraftmessmoduls (210) übertragen werden.

4. Verfahren zur Messwertübertragung nach einem der Ansprüche 1 bis 3, **dadurch gekennzeichnet, dass** die Bitsequenzen (B₁, B₂, ... Bₙ) mittels eines, vorzugsweise durch die Auswerteeinheit (270) erzeugten und über mindestens eine Synchronisationsleitung (244) an die Kraftmessmodule geleiteten, Taktsignals (S_{CL}) synchronisiert und/oder bitweise und im Wesentlichen simultan weitergeleitet werden.

5. Verfahren zur Messwertübertragung nach einem der Ansprüche 1 bis 4, **dadurch gekennzeichnet, dass** jeweils die von der Kraftmesszelle (220) erzeugten Messwerte durch einen in der Kraftmesszelle (220) angeordneten Analog-Digital-Wandler (A/D) in eine Bitsequenz (B₁, B₂, ... Bₙ) gewandelt werden.

6. Verfahren zur Messwertübertragung nach Anspruch 5, **dadurch gekennzeichnet, dass** jeweils die Signalverarbeitungseinheit (230) ein Schieberegister (SR) mit zwei Eingängen (INa, INb) aufweist, wobei an dessen ersten Eingang (INa) die durch den Analog-Digital-Wandler (A/D) digitalisierten Messwerte der Kraftmesszelle (220) und an dessen zweiten Eingang (INb) die Bitsequenz (B₁, B₂, ... Bₙ) der Signalverarbeitungseinheit (230) des mindestens einen weiteren Kraftmessmoduls (210) eingelesen werden.

7. Verfahren zur Messwertübertragung nach einem der Ansprüche 1 bis 6, **dadurch gekennzeichnet, dass** jeweils die Bitsequenz (B₁, B₂, ... Bₙ) der Signalverarbeitungseinheiten (230), oder gegebenenfalls des Schieberegisters (SR), mit der Bitsequenz (B₁, B₂, ... Bₙ) der Signalverarbeitungseinheit (230) eines benachbarten Kraftmessmoduls (210) kombiniert und diese kombinierte Bitsequenz als serieller Bitstrom an die Auswerteeinheit (270) oder an den zweiten Eingang (INb) der Signalverarbeitungseinheit (230) des mindestens einen weiteren Kraftmessmoduls (210) übertragen wird.

8. Verfahren zur Messwertübertragung nach Anspruch 7, **dadurch gekennzeichnet, dass** jeweils die Analog-Digital-Wandler (A/D) durch ein Steuersignal der Auswerteeinheit (270) gesteuert, insbesondere simultan gestartet, werden und/oder dass die Analog-Digital-Wandler (A/D) jeweils ein Status-Signal, insbesondere ein Anzeigesignal nach Beendigung des Wandlungsprozesses erzeugen, welches, gegebenenfalls via eine Logikschaltung, an die Auswerteeinheit (270) übermittelt wird.

9. Verfahren zur Messwertübertragung nach Anspruch 8, **dadurch gekennzeichnet, dass** die Auswerteeinheit (270) das Ende der am längsten dauernden Analog-Digital-Wandlung registriert und dass diese daraufhin ein Taktsignal (S_{CL}) zur Übertragung der Bitsequenz (B₁, B₂, ... Bₙ) und/oder der ein Steuersignal zum erneuten, vorzugsweise simultanen, Starten aller Analog-Digital-Wandler (A/D) sendet.

10. Verfahren zur Messwertübertragung nach einem der Ansprüche 1 bis 9, **dadurch gekennzeichnet, dass** während des Betriebs der Mehrfach-Kraftmessvorrichtung (200) ein Zeitintervall (T_{M}) für Messungen vorgesehen wird, während dem die Übertragung der Bitsequenzen (B₁, B₂, ... Bₙ) unterbrochen wird und/oder ein Zeitintervall (T_{C}) für die Messwertübertragung vorgesehen wird, während dem die Messwerterfassung unterbrochen wird.

11. Verfahren zur Messwertübertragung nach einem der Ansprüche 1 bis 10, **dadurch gekennzeichnet, dass** ein Zeitintervall zur Übertragung der Messwerte so lange bemessen wird, bis ein vorbestimmtes Muster der Bitsequenz (B₁, B₂, ... Bₙ) in der Auswerteeinheit (270) erscheint, insbesondere bis eine Sequenz von Null-Werten erscheint und am zweiten Eingang (INb) der Signalverarbeitungseinheit (230) des letzten weiteren Kraftmessmoduls (210) stets Null-Werte eingespeist werden.

12. Verfahren zur Messwertübertragung nach einem der Ansprüche 1 bis 11, **dadurch gekennzeichnet, dass** durch die Signalverarbeitungseinheit (230) mindestens eines Kraftmessmoduls (210) zusätzlich zu den Messwerten der Kraftmesszelle (220) die Messwerte weiterer Sensoren, insbesondere die Messwerte eines Temperatursensors, und/oder ein Identifizierungscode an die Auswerteeinheit (270) übermittelt werden.

13. Mehrfach-Kraftmessvorrichtung (200), insbesondere Mehrfach-Wägevorrichtung, mit mindestens zwei Kraftmessmodulen (210), jeweils aufweisend eine Kraftmesszelle (220) und eine Signalverarbeitungseinheit (230) deren Eingang (INa) mit der Kraftmesszelle (220) und deren Ausgang (OUT) über eine Signalleitung (240) mit einer Auswerteeinheit (270) verbunden ist, **dadurch gekennzeichnet, dass** jeweils die Signalverarbeitungseinheit (230) zur Umwandlung der Messwerte in eine Bitsequenz (B₁, B₂, ... Bₙ) geeignet ist und der Ausgang (OUT) der Signalverarbeitungseinheit (230) des ersten Kraftmessmoduls (210) über die Signalleitung (240) mit der Auswerteeinheit (270) verbunden ist und dass diese Signalverarbeitungseinheit (230) einen zusätzlichen Eingang (INb) aufweist, welcher über eine Zwischenleitung (242) mit dem Ausgang (OUT) der Signalverarbeitungseinheit (230) des mindestens einen weiteren Kraftmessmoduls (210) verbunden ist.

14. Mehrfach-Kraftmessvorrichtung (200) nach Anspruch 13, **dadurch gekennzeichnet, dass** die Signalverarbeitungseinheit (230) zwei Eingänge (INa und INb) aufweist, wobei der erster Eingang (INa) mit der Kraftmesszelle (220) und der zweiter Eingang (INb) über die Zwischenleitung (242) mit dem Ausgang (OUT) der Signalverarbeitungseinheit (230) des mindestens einen weiteren Kraftmessmoduls (210) verbunden ist.

15. Mehrfach-Kraftmessvorrichtung (200) nach Anspruch 13 oder 14, **dadurch gekennzeichnet, dass** die Signalverarbeitungseinheiten (230) aller weiteren Kraftmessmodule (210) kettenförmig miteinander verbunden sind und dass deren Bitsequenz (B₂, B₃, ... Bₙ) jeweils zur Signalverarbeitungseinheit (230) des jeweils benachbarten, näher zur Auswerteeinheit (270) angeordneten Kraftmessmoduls (210) übertragbar sind.

16. Mehrfach-Kraftmessvorrichtung (200) nach einem der Ansprüche 13 bis 15, **dadurch gekennzeichnet, dass** die die Signalverarbeitungseinheit (230) jeweils einen mit der Kraftmesszelle (220) verbundenen Analog-Digital-Wandler (A/D) zur Erzeugung der Bitsequenz (B₁, B₂, ... Bₙ) und/oder ein Schieberegister (SR) mit zwei Eingängen (INa, INb) aufweist, wobei der erste Eingang (INa) des Schieberegisters (SR) mit einem Analog-Digital-Wandler (A/D) und der zweite Eingang (INb) mit dem Ausgang (OUT) der Signalverarbeitungseinheit (230) des mindestens einen weiteren Kraftmessmoduls (210) verbunden ist.

17. Mehrfach-Kraftmessvorrichtung (200) nach einem der Ansprüche 13 bis 16, **dadurch gekennzeichnet, dass** der Ausgang (OUT) der Signalverarbeitungseinheit (230), gegebenenfalls des Schieberegisters (SR), zur Übertragung eines seriellen Bitstroms mit der Auswerteeinheit (270) oder mit dem zweiten Eingang (INb) der Signalverarbeitungseinheit (230) des mindestens einen weiteren Kraftmessmoduls (210) verbunden ist.

18. Mehrfach-Kraftmessvorrichtung (200) nach einem der Ansprüche 13 bis 17, **dadurch gekennzeichnet, dass** die Mehrfach-Kraftmessvorrichtung (200) eine Steuerleitung (248) aufweist, über welche jeweils die Signalverarbeitungseinheit (230), insbesondere ein Analog-Digital-Wandler (A/D), mit der Auswerteeinheit (270) verbunden sind und dass gegebenenfalls die Analog-Digital-Wandler (A/D) jeweils, vorzugsweise über Logikelemente (G), über eine gemeinsame Statusleitung (248), mit der Auswerteeinheit (270) verbunden sind.

19. Mehrfach-Kraftmessvorrichtung (200) nach Anspruch 16 bis 18, **dadurch gekennzeichnet, dass** die Auswerteeinheit (270) weitgehend räumlich getrennt und/oder weitgehend thermisch isoliert von den Kraftmesszellen (220) der jeweiligen Kraftmessmodule (210) angeordnet ist.

20. Mehrfach-Kraftmessvorrichtung (200) nach einem der Ansprüche 13 bis 19, **dadurch gekennzeichnet, dass** die Signalleitung (240) oder die Zwischenleitung (242) eine Kupplung aufweisen, mit der die Signalverarbeitungseinheit (230) des mindestens einen weiteren Kraftmessmoduls (210) in die Mehrfach-Kraftmessvorrichtung (200) einfügbar ist, insbesondere dass die Kupplung derart ausgebildet ist, dass beim Zusammenfügen der Kupplungsteile eine durchgehende elektrische Verbindung auftrennbar und dass jeweils eine Verbindungen zum zweiten Eingang (IN2) und zum Ausgang (OUT) der Signalverarbeitungseinheit (230) des einzufügenden Kraftmessmoduls (210) herstellbar ist.

21. Kraftmessmodul (210) für eine Mehrfach-Kraftmessvorrichtung (200) nach einem der Ansprüche 13 bis 20, **dadurch gekennzeichnet, dass** die Signalverarbeitungseinheit (230) einen zweiten Eingang (IN2) aufweist, welcher mit dem Ausgang (OUT) der Signalverarbeitungseinheit (230) eines weiteren Kraftmessmoduls (210) verbindbar ist.
